# DEMANDE DE BREVET EUROPEEN

(11) **EP 4 840 298 A1**
(43) Date de publication de la demande: **18.11.2026**
(21) Numéro de dépôt: 26176372.6
(22) Date de dépôt: 04.05.2026
(51) Int. Cl.: A01J 25/13, A01J 25/15

(54) **DISPOSITIF DE MOULAGE POUR LA FABRICATION DES FROMAGES ET PROCÉDÉ ASSOCIÉ**

(30) Priorité: 14.05.2025 FR 2505117
(71) Demandeur: Pillault, Emmanuel, 02270 Froidmont Cohartille (FR)
(72) Inventeur: Pillault, Emmanuel, 02270 Froidmont Cohartille (FR)
(74) Mandataire: RVDB

(57) **Abrégé**

L'invention concerne un dispositif de moulage (1), un système de moulage et un procédé de fabrication associé, notamment pour la production d'un produit alimentaire moulé (800, 801) tel qu'un fromage à partir d'un produit alimentaire initial (80, 81) à fraction fluide (81). Le dispositif de moulage comprend une unité de moulage (200, 341-344) incluant :
a) une portion primaire (30-34) comprenant au moins une cavité de moulage (35) configurée pour conformer le produit alimentaire moulé ;
b) au moins une portion secondaire (40a, b, 41a, b, 42a, b, 43a, b, 44a, b) comprenant au moins un canal de circulation (45) d'au moins la fraction fluide (81) du produit alimentaire initial ;
et au moins un moyen d'obturation (500) présentant au moins une projection (50) apte à coopérer par coulissement avec le canal de circulation (45) et à retenir et/ou presser la fraction non fluide du produit alimentaire initial dans la cavité de moulage.

## Description

### Domaine technique

La présente invention se place dans le domaine de la fabrication et du moulage de produit alimentaire à partir d'une produit alimentaire initial à fraction fluide.

Plus précisément l'invention se place dans le domaine de la fromagerie, concerne tous types de fromages, qu'ils soient à pâte lactique, à pâte molle ou bien encore à pâte pressée cuite ou non, et relève du domaine des moules à fromages et des procédés de fabrication de tels fromages.

### État de l'art

De nos jours, les fromages et produits assimilés sont obtenus à l'aide de systèmes d'égouttage mettant en œuvre des moules présentant des formes géométriques relativement banales, tels que des moules circulaires, rectangulaires, pyramidaux ou bien encore ovales.

Seuls quelques fromages, tels que le Cœur de Neufchâtel, le Dauphin de l'Avesnois, ou bien encore l'Ecrou du fromager produit à Moyon en Normandie, présentent une configuration un peu moins conventionnelle.

Ainsi, tous les fromages précédemment décrits présentent un motif en deux dimensions ou une configuration en trois dimensions symétrique et une épaisseur constante ou dont la variation est régulière. Cela est dû à la technique d'égouttage employée traditionnellement, qui met en jeu un contenant, c'est-à-dire un moule, une faisselle ou un emporte-pièce, parfois surdimensionné en hauteur ou complété par au moins une réhausse, et éventuellement un foncet venant presser la matière première par coulissement ajusté dans le contenant désiré. Le fromage obtenu présente en conséquence un volume final souvent inférieur aux dimensions dudit contenant.

Il est par ailleurs bien connu que la phase d'égouttage ainsi que les retournements nécessaires à la formation et au tassage de la pâte impliquent une diminution du volume pouvant aller jusqu'aux trois quarts du volume de matière première, c'est à dire de gel, initialement employée.

### Résumé de l'invention

L'invention vise à améliorer la situation décrite ci-dessus.

L'invention a pour but d'améliorer les possibilités et techniques de travail de la matière première, de mise en forme de celle-ci et de la pâte à obtenir et/ou obtenue, notamment : lactique, molle, pressée, persillée.

La fabrication du fromage nécessite la mise en œuvre de grandes étapes générales incontournables, dont la coagulation, l'égouttage, parfois le pressage, et enfin l'affinage, mais les paramètres desdites étapes dépendent fortement du produit fini désiré.

Plus précisément, le lait liquide subit tout d'abord l'étape de coagulation et prend l'état de gel, puis subit l'étape d'égouttage où il devient le caillé, et enfin par l'affinage on aboutit au fromage.

L'étape de coagulation permet d'aboutir à un gel relativement homogène. Cette transformation résulte de l'action de bactéries lactiques encore appelés ferments, d'un coagulant de source animale ou végétale, ou d'une combinaison de ceux-ci.

Bien entendu, le choix du coagulant impacte les propriétés du gel et son comportement à l'égouttage.

De manière générale, une fois le gel obtenu l'extraction par égouttage de la majeure partie de la fraction fluide dénommée lactosérum peut être réalisée. Pour cela le gel est découpé en fragments qui vont rejeter une première partie de cette fraction fluide. La découpe ou tranchage permet d'augmenter la surface d'exsudation du lactosérum.

L'égouttage est un processus complexe incluant d'une part un processus actif appelé synérèse qui est lié au pouvoir de contraction du gel et d'autre part un processus passif dépendant de la porosité et de la perméabilité des fragments.

Les fragments obtenus par tranchage, qui contiennent toujours une grande part d'humidité, sont alors transférés dans des moules afin de procéder à et/ou finaliser l'égouttage.

L'invention proposée peut permettre tout type d'égouttage, notamment :
- égouttage lent, par simple retournement et par gravité ;
- égouttage dit accéléré-pressé, avec pression mécanique ;
- égouttage dit pressé-chauffé, notamment entre 30°C et 55°C, préférentiellement entre 40°C et 55°C.

L'égouttage permet une élimination importante de lactosérum et produit une rétraction et un durcissement des fragments.

Des défauts d'égouttage peuvent survenir lors de la fabrication des fromages, le plus souvent par manque d'acidification pendant l'égouttage en moule et/ou par un travail de la matière insuffisant en termes de températures, de maîtrise de la taille et/ou du traitement des fragments, et de durée. Dans ces cas les fragments restent trop humides au moulage, et lors du démoulage le fromage peut se casser ou s'affaisser.

L'invention proposée permet de remédier à de tels défauts d'égouttage en proposant une solution qui permet notamment de traiter les fragments de manière plus efficace.

Également, le nombre de perforations des moules impacte la qualité de l'égouttage. Ce facteur est connu de manière théorique depuis longtemps (WEBER.F. (1976) - Étude de l'égouttage des coagulums de laits et composition des lactosérums. Thèse Université Caen, C.N.R.S. AO 12690 et RAMET. J.P. ISBN 92-5-202169-8) mais reste assez mal maîtrisé jusqu'à présent dans la pratique. L'une des conséquences est que l'égouttage est souvent hétérogène, par exemple en lien avec l'épaisseur du produit le cœur reste classiquement plus humide que la couche externe, ou bien en lien avec la forme du produit fini certaines parties restent plus humides tant à cœur et en surface que d'autres parties
Dès lors il est important de corriger ce phénomène et le rendre plus uniforme. C'est là encore l'un des objets de l'invention qui permet un contrôle modulable et précis des conditions d'apport de matière et/ou des conditions d'égouttage.

Un autre phénomène susceptible d'impacter l'égouttage ainsi que le produit moulé est le salage.

Le salage favorise l'expulsion de la fraction fluide lors de l'égouttage. Le salage permet.

Le salage favorise entre autres le développement de la saveur du fromage et la formation de la croûte puisqu'il impacte la croissance de micro-organismes. Le salage, qui consiste en un apport externe de sel, permet en outre d'abaisser l'activité de l'eau du produit. Ce paramètre définit la disponibilité de l'eau dans un produit, ici le gel ou les fragments de gel. Enfin, le salage induit un phénomène de diffusion par lequel le gel ou les fragments de gel se chargent en sel et relarguent du lactosérum. La présente invention permet d'obtenir un équilibre et une meilleure répartition de la teneur en sel dans toute la masse du produit.

De manière générale, le salage peut avoir lieu avant égouttage c'est-à-dire dans le lait liquide, ou éventuellement avant le moulage et/ou pressage c'est-à-dire quand les fragments baignent dans le lactosérum, et/ou après démoulage.

Avantageusement, l'invention proposée est compatible avec toute technique de salage et peut également être mise en œuvre dans le cas de produits moulés sans apport de sel tels certains fromages frais qui ne sont pas salés.

Préférentiellement, selon l'invention, et quelle que soit la variante du dispositif ou du système de moulage, le salage est réalisé au niveau du lait et/ou avant moulage quand les fragments viennent d'être tranchés et baignent dans le lactosérum.

L'étape finalisant l'égouttage dans le processus fromager est le pressage passif et/ou actif, optionnel dans le cas du pressage actif.

Classiquement, le pressage a pour but d'extraire et donc d'abaisser jusqu'à la valeur souhaitée la quantité résiduelle de lactosérum des fragments de gel.

Le pressage passif correspond au tassement naturel des fragments sur eux-mêmes sous l'effet de leur propre poids. Le pressage actif correspond à un pressage et/ou tassement qui peut être manuel, ou réalisé à l'aide de poids additionnels ou bien encore automatisé, et qui exerce une pression mécanique complémentaire sur les fragments de gel.

Selon l'invention, la durée de pressage actif peut être comprise entre 1 jour et 3 jours, préférentiellement entre 24 heures et 48 heures, encore plus préférentiellement entre 36 heures et 48 heures.

Lors de l'égouttage et/ou du pressage, il est possible et parfois nécessaire d'effectuer des retournements. L'invention proposée permet également de régulariser à la fois l'égouttage et/ou le pressage et la forme du fromage en compensant les effets des retournements. La fréquence et le nombre des opérations et des retournements dépendent du type de fromage donné. L'Homme du métier sait choisir le nombre et la fréquence de ceux-ci.

Pour parvenir notamment à ce but, et tel que décrit ci-après, l'invention permet la création d'une réserve de matière et de volume de fromage compensant la perte de fluide et le tassement de la matière précédemment évoqués. L'invention garantit par ailleurs le remplissage, le maintien et/ou le plaquage de la pâte en cours de solidification contre la surface de contact de la cavité de moulage et donc dans toutes les complexités tridimensionnelles de ladite cavité, afin d'obtenir la forme finale souhaitée pour le produit alimentaire moulé tel qu'un fromage.

Il a été décrit jusqu'à présent le principe de fabrication fromagère, basé sur l'emploi de lait d'origine animale tel que le lait de vache ou de chèvre, et son amélioration par l'invention. Néanmoins, l'invention peut également permettre le travail d'autres matières en tant que produit alimentaire initial à fraction fluide, tels que des produits alimentaires mettant en œuvre des jus végétaux. L'invention peut permettre la mise en forme de produits assimilés à du fromage ou de consistance proche, obtenus à partir de jus végétaux, par exemple les similifromages végétaux ou le tofu.

Dans la suite de cette description le terme gel concerne tout gel obtenu à partir de lait d'origine animale ou de jus végétaux riches en protéines et graisses tels que le lait de soja, le lait d'amande et qui sont susceptibles de cailler de manière similaire au lait d'origine animale.

Dans la suite de cette description on entend par gel lacté tout gel obtenu à partir de lait d'origine animale, tel que le lait de vache, le lait de chèvre, le lait de brebis.

Dans la suite de cette description on entend par produit alimentaire initial à fraction fluide tout produit présentant des fragments baignant dans une fraction fluide. Le fluide peut être un fluide aqueux et/ou huileux. Les fragments, qui constituent la fraction non fluide du produit alimentaire initial à fraction fluide, peuvent être solides ou semi-solides tel que des fragments de gel.

Préférentiellement, on entend par produit alimentaire initial à fraction fluide tout produit coagulé sous forme de gel, apte à relarguer une fraction fluide et baignant dans ledit fluide. Tout à fait préférentiellement, on entend par produit alimentaire initial à fraction fluide tout produit coagulé sous forme de gel lacté, apte à relarguer une fraction fluide de lactosérum et baignant dans celui-ci.

Dans la suite de cette description on entend par produit alimentaire moulé tout produit alimentaire obtenu par le tassement des fragments du produit alimentaire initial à fraction fluide et par l'élimination au moins partielle dudit fluide jusqu'à l'obtention du seuil désiré d'imprégnation par ledit fluide.

Préférentiellement, on entend par produit alimentaire moulé un fromage, d'origine animale, obtenu par le tassement des fragments du gel lacté sous forme de caillé et par l'élimination du lactosérum jusqu'à l'obtention du seuil désiré d'humidité résiduelle dans ledit fromage.

Le produit alimentaire initial à fraction fluide peut être salé par adjonction de sel ou non. Ainsi, l'objet de la présente invention concerne selon un premier aspect un dispositif de moulage pour la fabrication d'un produit alimentaire moulé à partir d'un produit alimentaire initial à fraction fluide, comprenant :
- une unité de moulage présentant une surface externe et incluant :
   a) une portion primaire comprenant au moins une cavité de moulage présentant une surface de contact ouverte au moins en une première ouverture de service, ladite surface de contact étant configurée pour conformer le produit alimentaire moulé ;
   b) au moins une portion secondaire comprenant au moins un canal de circulation d'au moins la fraction fluide du produit alimentaire initial, ledit canal de circulation s'étendant entre l'au moins une première ouverture de service de la cavité de moulage et une seconde ouverture de service débouchant sur la surface externe ;
- au moins un moyen d'obturation présentant au moins une projection apte à être insérée au niveau de la seconde ouverture de service et à coopérer par coulissement avec le canal de circulation jusqu'à la première ouverture de service, ladite projection présentant à son extrémité distale une surface terminale venant en regard et affleurant la première ouverture de service dudit canal de circulation, ladite projection étant configurée pour être au moins partiellement logée dans ledit canal de circulation, ladite projection étant configurée pour retenir et/ou presser la fraction non fluide du produit alimentaire initial dans la cavité de moulage.

Préférentiellement, le dispositif de moulage permet ainsi la fabrication d'un fromage moulé à partir d'un gel ou des fragments de gel obtenus par coagulation de lait d'origine animale, par égouttage et/ou pressage de la fraction fluide de lactosérum associée.

Afin de mouler le produit alimentaire désiré l'unité de moulage inclut une portion primaire comprenant au moins une cavité de moulage présentant une surface de contact ouverte au moins en une première ouverture de service, ladite surface de contact étant configurée pour conformer le produit alimentaire moulé.

La cavité de moulage peut présenter toute forme adéquate correspondant au produit alimentaire moulé. Avantageusement, la cavité de moulage est configurée pour conformer le fromage dans les trois dimensions, permettant ainsi de s'affranchir des contraintes usuelles aboutissant à des fromages présentant obligatoirement un contour à bords verticaux ou obliques.

La cavité de moulage présente une surface de contact ouverte au moins en une première ouverture de service. L'au moins une ouverture de service est dimensionnée pour et apte à laisser passer le produit alimentaire à fraction fluide.

La surface de contact est au moins progressivement mise en contact au cours du procédé de fabrication avec le produit alimentaire initial à fraction fluide et avec le produit alimentaire moulé, elle est donc constituée d'au moins un matériau apte au contact alimentaire tel que le silicone, le polypropylène, le polyéthylène, préférentiellement le polyéthylène haute densité PEHD.

Avantageusement, la portion primaire et/ou l'au moins une portion secondaire est constituée ou recouverte d'une couche d'au moins un matériau apte au contact alimentaire tel que le silicone, le polypropylène, le polyéthylène, préférentiellement le polyéthylène haute densité PEHD.

Avantageusement, l'unité de moulage présente une surface de travail correspondant à au moins une portion de la surface de contact de la cavité de moulage et/ou à au moins une portion de la surface de l'au moins un canal de circulation.

L'unité de moulage inclut également au moins une portion secondaire comprenant au moins un canal de circulation d'au moins la fraction fluide du produit alimentaire initial, ledit canal de circulation s'étendant entre l'au moins une première ouverture de service de la cavité de moulage et une seconde ouverture de service débouchant sur la surface externe.

La portion secondaire, qui correspond dans la pratique à une réserve de matière, permet de compenser la perte de volume et les retournements nécessaires à la fabrication du produit alimentaire moulé, sans perturber les phénomènes de transformation du produit se déroulant dans la cavité de moulage. La portion secondaire comprend ainsi au moins un canal de circulation d'au moins la fraction fluide du produit alimentaire initial.

Le canal de circulation s'étend entre l'au moins une première ouverture de service de la cavité de moulage et une seconde ouverture de service débouchant sur la surface externe de l'unité de moulage.

Dans certaines variantes de l'invention où l'unité de moulage est constituée d'un assemblage de blocs, la première ouverture de service de la cavité peut faire face et coïncider avec l'ouverture terminale du canal de circulation qui lui correspond.

On entend par l'expression « s'étend entre » le fait que le canal met en communication la cavité de moulage et la surface externe de l'unité de moulage.

L'unité de moulage peut être un bloc-moule unique, c'est-à-dire apte à conformer un unique produit alimentaire moulé ou être un bloc-moule présentant de multiples cavités de moulage. Le dispositif de moulage comprend en outre au moins un moyen d'obturation présentant au moins une projection apte à être insérée au niveau de la seconde ouverture de service et à coopérer par coulissement avec le canal de circulation jusqu'à la première ouverture de service, ladite projection présentant à son extrémité distale une surface terminale venant en regard et affleurant la première ouverture de service dudit canal de circulation, ladite projection étant apte à être au moins partiellement logée dans ledit canal de circulation, ladite projection étant apte à retenir et/ou presser, préférentiellement de manière homogène, la fraction non fluide du produit alimentaire initial dans la cavité de moulage.

Le canal de circulation et la projection du moyen d'obturation coopèrent par coulissement, un jeu mécanique existant entre les deux éléments. Le jeu mécanique est suffisant pour laisser circuler la fraction fluide du produit alimentaire initial à fraction fluide.

Le moyen d'obturation peut comprendre une ou plusieurs projections, chaque projection étant apte à être insérée au niveau d'un canal de circulation.

L'au moins une projection du moyen d'obturation est apte à retenir les fragments du produit alimentaire initial à fraction fluide et/ou à exercer une pression sur le produit alimentaire initial à fraction fluide. La pression exercée peut être passive lorsqu'il s'agit de la force de gravité et/ou active lorsqu'une pression manuelle, ou réalisée à l'aide de poids additionnels ou bien encore automatisée est exercée sur le moyen d'obturation.

Dans certaines variantes de l'invention, la pression est exercée de manière homogène, c'est-à-dire régulière, tout à fait préférentiellement de manière constante, tout au long du trajet de la projection dans le canal de circulation.

Dans certaines variantes, la pression exercée est la même pour toute projection prévue dans le dispositif.

Dans certaines variantes, la pression exercée peut être différente et choisie selon les besoins spécifiques au niveau de chaque projection.

Ainsi l'invention offre de multiples possibilités de modulation et de répartition des forces sur les fragments du produit alimentaire initial à fraction fluide.

Également l'invention garantit un tassement ou compaction homogène des fragments et/ou une répartition du sel homogène, tout au long du processus de moulage.

La section du canal de circulation et de la projection du moyen d'obturation peuvent présenter des formes différentes, par exemple le canal peut présenter une section carrée et la projection du moyen d'obturation peut présenter une section circulaire.

Préférentiellement, la section du canal de circulation et la projection du moyen d'obturation présentent une forme similaire, par exemple circulaire ou carrée.

Ainsi, lorsqu'il est libre le canal de circulation permet d'alimenter la cavité de moulage en produit alimentaire à fraction fluide ou de l'en vider, tandis que lorsqu'il coopère avec la projection du moyen d'obturation du dispositif de moulage, le canal de circulation est apte à laisser passer uniquement la fraction fluide par le jeu mécanique existant entre les éléments dudit dispositif.

Avantageusement, le jeu mécanique entre la surface du canal de circulation et la projection du moyen d'obturation en cas de contact est au maximum de 0,5 mm, préférentiellement au maximum 0,2 mm, autrement dit s'il existe une zone de contact entre la surface du canal et la surface de la projection du moyen d'obturation le jeu peut être nul tandis qu'au niveau d'autres zones, le jeu est au maximum de 0,5 mm, préférentiellement au maximum 0,2 mm. Avantageusement, le jeu mécanique flottant entre la surface du canal de circulation et la projection du moyen d'obturation est au maximum de 0,25 mm, préférentiellement au maximum 0,1 mm, autrement dit lorsqu'il n'y a pas de zone de contact entre la surface du canal et la surface de la projection du moyen d'obturation le jeu mécanique est au maximum de 0,25 mm, préférentiellement au maximum 0,1 mm.

Tout à fait préférentiellement, le jeu mécanique flottant entre la surface du canal de circulation et la projection du moyen d'obturation est compris entre 0,05 mm et 1 mm. lorsque ceux-ci présentent une section de forme similaire et sont centrés, autrement dit lorsqu'il n'y a pas de zone de contact entre la surface du canal et la surface de la projection du moyen d'obturation et qu'il existe un espace homogène autour de la projection du moyen d'obstruction relativement à la surface du canal de circulation.

L'invention concerne selon un autre de ses aspects l'utilisation du dispositif de moulage ou du système de moulage décrit pour la fabrication d'un produit alimentaire moulé obtenu à partir d'un produit alimentaire initial à fraction fluide. Préférentiellement, l'invention concerne l'utilisation du dispositif de moulage ou du système de moulage pour la fabrication d'un fromage obtenu à partir d'un gel lacté. Tout à fait préférentiellement l'invention concerne l'utilisation du dispositif de moulage ou du système de moulage pour la fabrication d'un fromage à pâte pressée ou à pâte molle.

L'invention concerne selon un autre de ses aspects l'utilisation du dispositif de moulage ou du système de moulage décrit, pour la fabrication d'un produit alimentaire moulé, obtenu à partir d'un produit alimentaire initial à fraction fluide et par le procédé de fabrication associé. Préférentiellement, l'invention concerne l'utilisation du dispositif de moulage ou du système de moulage pour la fabrication d'un fromage obtenu à partir d'un gel lacté via le procédé de fabrication décrit. Tout à fait préférentiellement l'invention concerne l'utilisation du dispositif de moulage ou du système de moulage pour la fabrication d'un fromage à pâte pressée ou à pâte molle via le procédé de fabrication décrit.

Avantageusement, la surface de contact de la cavité de moulage du dispositif de moulage est en outre ouverte au moins en une ouverture additionnelle configurée pour laisser circuler uniquement la fraction fluide du produit alimentaire initial depuis la cavité de moulage vers la surface externe. L'ouverture additionnelle peut être un trou ou bien encore un canal, permettant la mise en communication entre la cavité de moulage et la surface externe de l'unité de moulage. L'ouverture additionnelle peut présenter toute forme adéquate, notamment de section, par exemple : circulaire, carrée, rectangulaire, oblongue.

La section de l'ouverture additionnelle présente une surface comprise entre 0,5 mm² et 5 mm², préférentiellement entre 1 mm² et 4 mm².

Dans une variante tout à fait préférée, la section de l'ouverture additionnelle est circulaire et présente une surface comprise entre 2 mm² et 3 mm².

Dans des variantes préférées de l'invention, l'unité de moulage est constituée d'un ensemble de blocs aptes à être assemblés, chaque bloc présentant :
a) au moins une surface de couplage apte à coopérer avec au moins une surface de couplage d'au moins un autre bloc de l'ensemble de blocs ;
b) au moins une surface de travail correspondant à au moins une portion de la surface de contact de la cavité de moulage et/ou à au moins une portion de la surface de l'au moins un canal de circulation.

L'assemblage des blocs peut se faire par tout moyen adapté et mettre en jeu au moins un moyen d'assemblage, tel qu'un système aimanté, un système à enclenchement ou emboîtement par exemple par coopération de projections et d'encoches, par tenons et mortaises ou bien encore tel qu'un système d'attaches par exemple à grenouillère.

L'au moins un moyen d'assemblage permettant l'assemblage des blocs peut être disposé au niveau de l'au moins une surface de couplage d'au moins un bloc et/ou au niveau de l'au moins une surface externe d'au moins un bloc.

L'assemblage des blocs s'effectue au moins par sous-ensemble de deux blocs. Préférentiellement chaque bloc est assemblé au moins à un bloc voisin.

Tout à fait préférentiellement chaque bloc est assemblé à chacun des blocs voisins. Préférentiellement chaque bloc présente au moins une surface de couplage plane apte à coopérer avec au moins une surface de couplage plane d'au moins un autre bloc de l'ensemble de blocs.

Dans certaines variantes de l'invention où l'unité de moulage est constituée d'un ensemble de blocs aptes à être assemblés, un premier sous-ensemble de blocs primaires définit en position assemblée ladite portion primaire et ladite cavité de moulage, et chaque bloc primaire présente une portion de la surface de contact de la cavité de moulage.

Dans certaines variantes de l'invention où l'unité de moulage est constituée d'un ensemble de blocs aptes à être assemblés, un second sous-ensemble de blocs secondaires de l'ensemble de blocs définit en position assemblée ladite portion secondaire et au moins un bloc secondaire dudit second sous-ensemble comprend l'au moins un canal de circulation et/ou présente au moins une portion de la surface de l'au moins un canal de circulation.

Dans certaines variantes du dispositif, l'extrémité proximale de la projection du moyen d'obturation présente une butée de fin de course configurée pour venir en appui avec la surface externe de l'unité de moulage lorsque la projection est complètement logée dans le canal de circulation. Une telle butée peut permettre de saisir aisément le moyen d'obturation et/ou d'éviter tout dépassement de la course de la projection dans le canal de circulation qui aboutirait à sa pénétration dans ladite cavité.

Avantageusement, le canal de circulation peut constituer un volume de réserve pour le produit alimentaire initial à fraction fluide. Il est ainsi notamment possible :
- d'alimenter en continu la cavité de moulage sans qu'il soit nécessaire d'attendre que celle-ci se vide partiellement ; et/ou
- de surdimensionner le produit moulé de sorte à obtenir un excédent dans le canal de circulation lors du démoulage, l'excédent permettant par exemple de manipuler le produit moulé sans risque et étant par la suite ébavuré.

Selon l'invention le canal de circulation peut présenter toute trajectoire de circulation adéquate, par exemple courbe ou rectiligne. Préférentiellement, le canal de circulation est rectiligne. Bien entendu, lorsque le dispositif comprend plusieurs canaux de circulation, ceux-ci peuvent présenter différentes trajectoires de circulation. Préférentiellement, lorsque le dispositif comprend plusieurs canaux de circulation, ceux-ci présentent tous une trajectoire de circulation rectiligne.

Dans des variantes préférées du dispositif de moulage, le canal de circulation est disposé selon un axe correspondant à la normale au plan de la première ouverture de service orientée vers l'extérieur de la cavité de moulage.

Dans des variantes préférées du dispositif de moulage, la surface terminale de la projection présente une texturation faisant saillie dans la cavité de moulage au travers de la première ouverture de service. Une telle texturation permet d'obtenir un rendu particulier à la surface du produit alimentaire moulé.

Bien entendu, lorsque le dispositif comprend plusieurs projections, celles-ci peuvent présenter tout panachage adéquat selon les besoins, par exemple certaines surfaces terminales peuvent être texturées et d'autres non, ou bien toutes peuvent être texturées. Les texturations peuvent être identiques ou non. Une texturation peut par exemple être un motif, un lettrage.

Selon l'invention, le dispositif de moulage peut comprendre un premier moyen de filtrage disposé en regard de l'au moins une première ouverture de service et/ou de l'au moins une ouverture additionnelle.

Selon l'invention, le dispositif de moulage peut comprendre un second moyen de filtrage disposé en regard de l'au moins une seconde ouverture de service.

Selon l'invention, le premier et/ou le second moyen de filtrage peut être apposé en regard de l'au moins une ouverture respective précitée par tout moyen adéquat, par exemple :
- en étant maintenu mécaniquement intercalé entre un moyen d'obturation et l'unité de moulage ou bien en étant mécaniquement intercalé entre la portion primaire et l'au moins une portion secondaire ;
- en étant fixé par tout moyen adéquat à l'unité de moulage par exemple par aimantation ou bien encore par vissage ou clipsage.

Le premier et/ou le second moyen de filtrage permet de retenir les fragments dans la cavité de moulage et de laisser circuler la fraction fluide du produit alimentaire initial à fraction fluide, par exemple le premier et/ou le second moyen de filtrage peut être une grille, une plaque perforée ou bien une toile. Le premier et/ou le second moyen de filtrage présente au moins une ouverture de filtrage. L'ouverture de filtrage peut présenter toute forme adéquate, notamment de section, par exemple : circulaire, carrée, rectangulaire, oblongue.

La section de l'ouverture de filtrage présente une surface comprise entre 0,5 mm² et 5 mm², préférentiellement entre 1 mm² et 4 mm².

Dans une variante tout à fait préférée, la section de l'ouverture de filtrage est circulaire et présente une surface comprise entre 2 mm² et 3 mm².

Le premier moyen de filtrage peut être disposé seul en regard de la première ouverture de service et/ou de l'ouverture additionnelle, ou bien venir en complément d'une projection d'un moyen d'obturation. Dans ce dernier cas il peut être intercalé entre la projection et la première ouverture de service.

Avantageusement dans d'autres variantes, le premier moyen de filtrage peut être disposé en regard de plusieurs premières ouvertures de service et/ou de plusieurs ouvertures additionnelles. Il peut alors être disposé seul en regard desdites premières ouvertures de service et/ou desdites ouvertures additionnelles, ou bien venir en complément de projections d'au moins un moyen d'obturation. Dans ce dernier cas il peut être intercalé entre les projections et les premières ouvertures de service.

Avantageusement dans certaines variantes, le second moyen de filtrage peut être disposé en regard de plusieurs secondes ouvertures de service.

Avantageusement, le premier moyen de filtrage peut présenter une texturation faisant saillie dans la cavité de moulage au travers de la première ouverture de service et/ou de l'ouverture additionnelle.

Dans des variantes préférées de l'invention, au moins la surface de contact de la cavité de moulage, et préférentiellement l'ensemble du dispositif de moulage, est constituée d'au moins un matériau apte au contact alimentaire, telle que le silicone, le polypropylène, le polyéthylène, préférentiellement le polyéthylène haute densité PEHD.

Pour un canal de circulation, celui-ci est :
- « orienté vers le haut » lorsque le vecteur normal N à la surface de la première ouverture de service, orienté de la première ouverture de service vers la seconde ouverture de service, pointe vers l'espace supérieur relativement au plan horizontal contenant l'origine dudit vecteur ;
- « orienté vers le bas » lorsque le vecteur normal N à la surface de la première ouverture de service, orienté de la première ouverture de service vers la seconde ouverture de service, pointe vers l'espace inférieur relativement au plan horizontal contenant l'origine dudit vecteur ;
- « orienté horizontalement » lorsque le vecteur normal N à la surface de la première ouverture de service, orienté de la première ouverture de service vers la seconde ouverture de service, appartient au plan horizontal contenant l'origine dudit vecteur.

Selon l'invention, la force de pressage actif pour une projection d'un moyen d'obturation peut être comprise entre 1 g/cm2 et 1000 g/cm2, préférentiellement entre 50 g/cm2 et 500 g/cm2, encore plus préférentiellement entre 100 g/cm2 et 250 g/cm2.

Selon l'invention, la force de pressage actif est exercée par l'au moins une projection coopérant par coulissement avec un canal de circulation orienté vers le haut ou horizontalement.

Selon encore un autre aspect, l'invention concerne un système de moulage mettant en œuvre un dispositif selon l'invention, et comprenant au moins un sous-système automatisé parmi :
- un sous-système d'actionnement configuré pour actionner par coulissement l'au moins une projection de l'au moins un moyen d'obturation dans le canal de circulation ;
- un sous-système de positionnement apte détecter une position de travail actuelle de l'unité de moulage et à positionner au moins l'unité de moulage dans une position de travail effective à partir de la position de travail actuelle détectée, préférentiellement par pivotement au moins l'unité de moulage autour d'un axe horizontal H, tout à fait préférentiellement le pivotement étant d'un demi-tour ;
- un sous-système vibrationnel configuré pour faire vibrer ledit dispositif de moulage , préférentiellement dans le plan horizontal, afin de faciliter l'élimination de la fraction fluide du produit alimentaire initial à fraction fluide.

Avantageusement, dans les variantes du système de moulage selon l'invention comprenant un sous-système automatisé de positionnement, le dispositif de moulage comprend au moins un moyen de détection et/ou un moyen de transmission de la position de travail de l'unité de moulage audit système de moulage. Par exemple, l'unité de moulage comprend au moins un capteur apte à déterminer son positionnement dans l'espace tel qu'une centrale inertielle et un moyen de transmission sans fil apte à transmettre l'information de position au sous-système de positionnement.

Avantageusement, le sous-système d'actionnement configuré pour actionner par coulissement l'au moins un moyen d'obturation, permettant de ce fait l'actionnement par coulissement de l'au moins une projection dans le canal de circulation.

Dans certaines variantes avancées de l'invention, lorsque le moyen d'obturation comprend plusieurs projections celui-ci peut être souple et/ou articulé. Dans de telles variantes où le moyen d'obturation est souple et/ou articulé, le sous-système d'actionnement peut être configuré pour actionner par coulissement au moins une projection dans le canal de circulation correspondant.

Afin d'obtenir le produit alimentaire moulé à l'aide du dispositif de moulage ou du système de moulage précédemment décrit, un procédé de fabrication d'un produit alimentaire moulé à partir d'un produit alimentaire initial à fraction fluide est prévu, comprenant :
- une première étape de détection de la position de travail actuelle de l'unité de moulage et de choix d'une position de travail effective pour l'unité de moulage au moins parmi une première et une seconde position de travail, la position de travail effective étant différente de la position de travail précédemment choisie lorsque celle-ci existe ;
- une deuxième étape de positionnement au moins de l'unité de moulage dans la position de travail effective choisie à partir de la position de travail actuelle détectée, préférentiellement par pivotement d'au moins l'unité de moulage autour d'un axe horizontal H, tout à fait préférentiellement le pivotement étant d'un demi-tour ;
- une troisième étape consistant à équiper, lorsqu'il existe et s'il en est dépourvu, l'au moins un canal de circulation de l'unité de moulage orienté horizontalement ou vers le bas dans la position de travail effective, avec un moyen de filtrage et/ou un moyen d'obturation dont la projection est complétement logée dans ledit canal ;
- une quatrième étape consistant à libérer l'au moins un canal de circulation orienté vers le haut dans la position de travail effective, en cas de présence, du moyen d'obturation et/ou du moyen de filtrage ;
- une cinquième étape de remplissage de la cavité de moulage et de l'au moins un canal de circulation par le produit alimentaire initial à fraction fluide ;
- une sixième étape consistant à actionner par coulissement l'au moins une projection de l'au moins un moyen d'obturation dans l'au moins un canal de circulation de l'unité de moulage orienté vers le haut dans la position de travail effective , lorsque ledit canal existe, jusqu'à ce que la surface terminale de l'extrémité distale de ladite projection dudit moyen d'obturation vienne en regard et affleure la première ouverture de service de la cavité de moulage ;
- optionnellement, après la sixième étape la réitération des quatrième, cinquième et sixième étapes K fois, K étant un entier compris entre un et au plus dix et dépendant du produit alimentaire moulé à obtenir ;
- optionnellement, la réitération, tant que le produit alimentaire moulé n'est pas obtenu, successivement des première, deuxième, troisième, quatrième, cinquième et sixième étapes. Avantageusement, lors de la première étape le choix d'une position de travail effective pour l'unité de moulage s'effectue parmi un panel de positions de travail adéquates prédéterminées, le nombre de positions de travail appartenant audit panel dépendant entre autres :
- du type de produit alimentaire à mouler, par exemple du type de pâte fromagère à travailler et du type de fromage à obtenir,
- de la forme de la cavité de moulage et de la complexité des recoins à remplir,
- du nombre et du positionnement de l'au moins un canal de circulation,
- du nombre de retournements nécessaires à l'obtention du produit alimentaire moulé.

Préférentiellement, le panel comprend au moins une position de travail prédéterminée.

Tout à fait préférentiellement, le panel comprend au moins une première et une seconde position de travail prédéterminées.

La position de travail effective est différente de la position de travail précédemment choisie lorsque celle-ci existe, puisque c'est la modification de position du dispositif de moulage au cours du temps qui va permettre de façonner le produit alimentaire moulé.

Enfin, selon l'invention le premier et/ou le second moyen de filtrage peut ainsi selon les besoins :
- équiper, lorsqu'il existe et s'il en est dépourvu, l'au moins un canal de circulation de l'unité de moulage orienté horizontalement ou vers le bas dans la position de travail effective ;
- être libéré de l'au moins un canal de circulation orienté vers le haut dans la position de travail effective, par exemple afin de remplir la cavité de moulage et/ou le canal de circulation avec le produit alimentaire initial à fraction fluide.

Afin de compenser la perte en fraction fluide liée à l'égouttage et/ou aux retournements (pouvant aller jusqu'aux trois quarts du volume du produit alimentaire initial à fraction fluide employé) tout en ayant un dispositif de moulage, un système de moulage et un procédé de fabrication efficaces et rapides à mettre en œuvre, la somme du ou des volumes libres constitués par l'au moins un canal de circulation orienté vers le haut et optionnellement par l'au moins un canal de circulation orienté horizontalement dans une position de travail effective est comprise entre une fois et trois fois le volume de la cavité de moulage.

On entend par volume libre le volume du canal de circulation à vide, notamment sans projection coulissante présente à l'intérieur.

Autrement dit, en position de travail effective telle que décrite ci-avant, le produit alimentaire initial à fraction fluide est fourni à la cavité de moulage par l'intermédiaire de l'au moins un canal de circulation orienté vers le haut et optionnellement de l'au moins un canal de circulation orienté horizontalement, qui doit être dimensionné pour garantir un approvisionnement ou remplissage efficace et rapide. Ainsi le volume global procuré par et correspondant selon les variantes soit à un unique canal de circulation soit à un ensemble de canaux de circulation, orienté vers le haut et optionnellement horizontalement dans la position de travail effective, est un volume compris entre une fois et trois fois le volume de la cavité de moulage.

L'approvisionnement ou remplissage de la cavité de moulage s'effectue au maximum en 40 minutes, préférentiellement en un temps inférieur ou égal à 25 minutes, encore plus préférentiellement en un temps inférieur ou égal à 15 minutes. L'approvisionnement ou remplissage de la cavité de moulage peut être effectué, conformément notamment à la cinquième étape du procédé de fabrication décrit ci-avant, en une ou plusieurs fois. Préférentiellement, l'approvisionnement ou remplissage s'effectue en position de travail effective via l'au moins un canal orienté vers le haut en cas de pressage passif ou de pressage actif manuel ou réalisé à l'aide de poids additionnels.

Préférentiellement, l'approvisionnement ou remplissage s'effectue en position de travail effective via l'au moins un canal orienté vers le haut ou horizontalement en cas de pressage actif automatisé.

### Figures

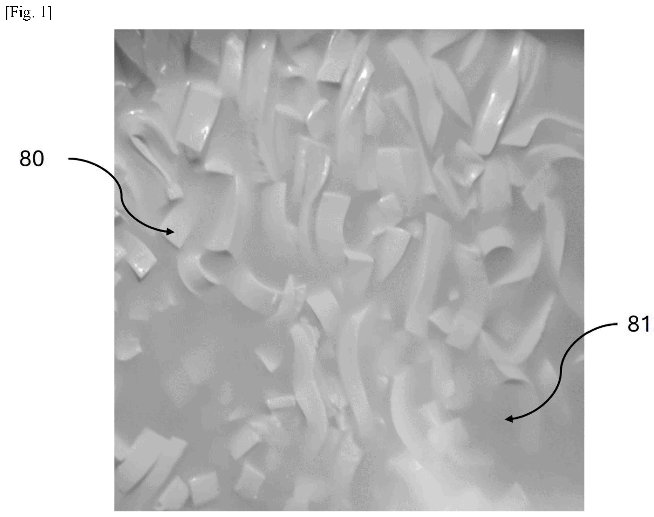

D'autres caractéristiques et avantages de la présente invention ressortiront de la description ci-dessous, en référence aux figures 1 à 9 annexées qui en illustrent quelques exemples de réalisation dépourvu de tout caractère limitatif et sur lesquelles :
[Fig. 1]
   La figure 1 illustre l'aspect du produit alimentaire initial à fraction fluide ;
[Fig. 2]

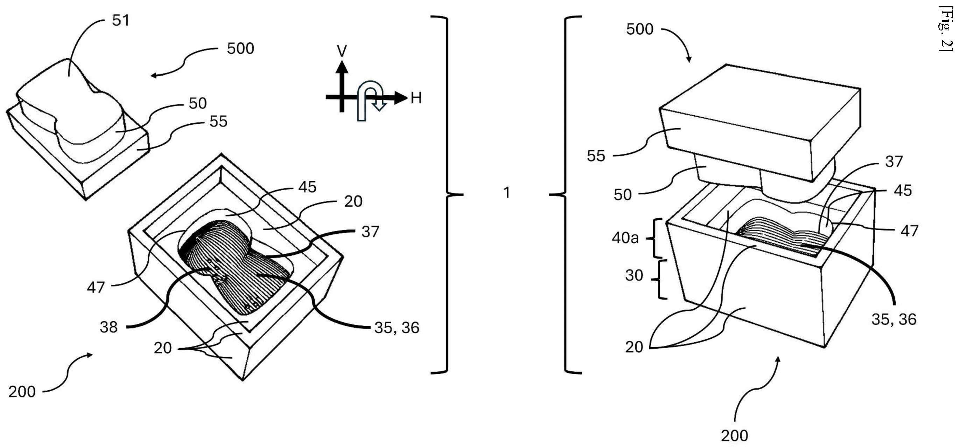

   La figure 2 représente une première variante du dispositif de moulage selon l'invention dans laquelle l'unité de moulage est monobloc ;
[Fig. 3]

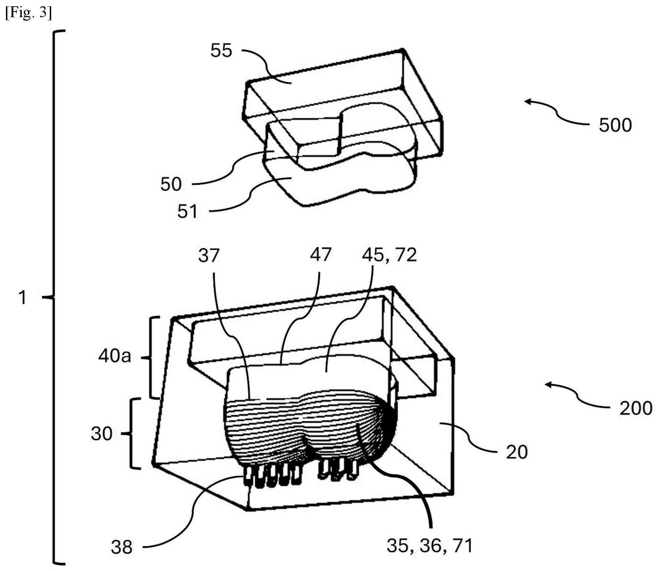

   La figure 3 représente la première variante du dispositif de moulage selon l'invention en vue filaire transparente ;
[Fig. 4]

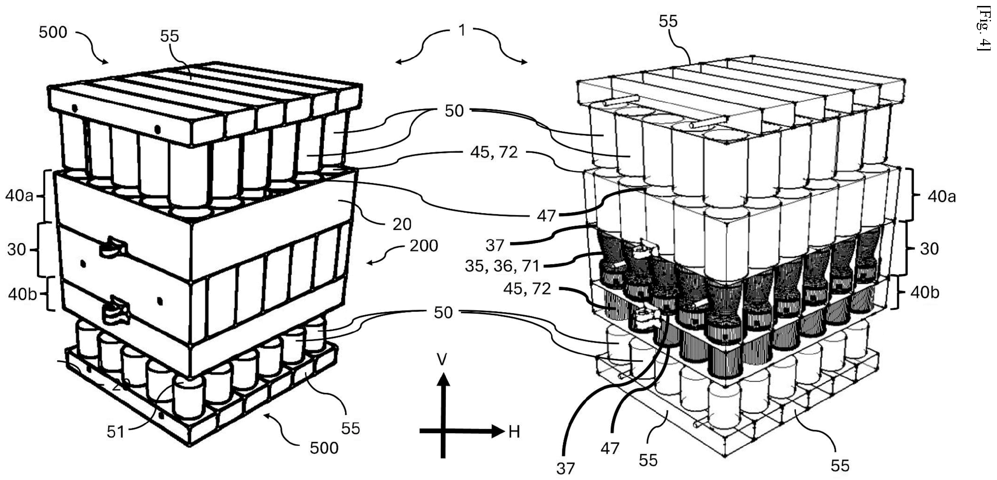

   La figure 4 représente une seconde variante du dispositif de moulage selon l'invention comprenant deux moyens d'obturation et dans lequel l'unité de moulage dispose de deux portions secondaires venant en superposition de la portion primaire ;
[Fig. 5]

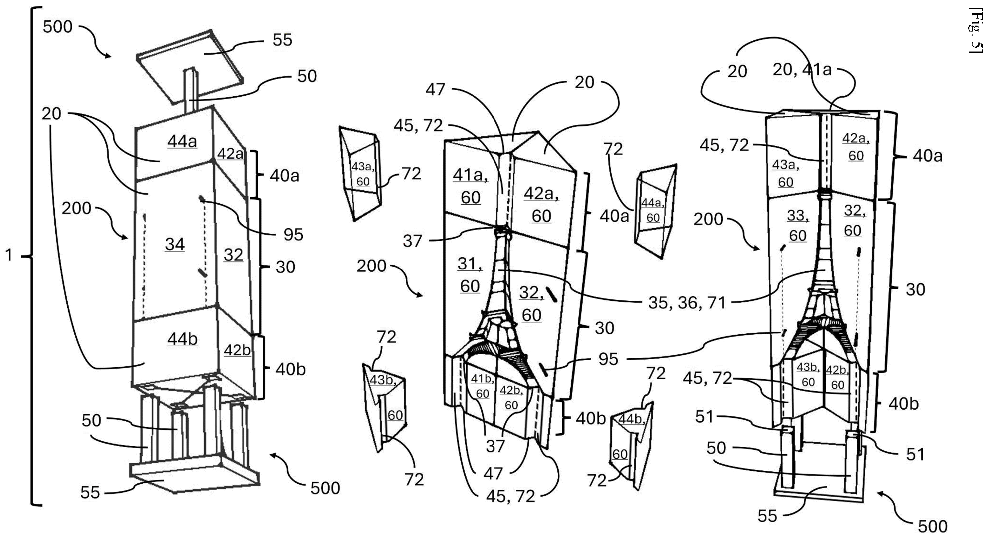

   La figure 5 représente une troisième variante du dispositif de moulage selon l'invention dans laquelle l'unité de moulage est constituée par un assemble de blocs formant d'une part la portion primaire et d'autre part les portions secondaires de l'unité de moulage;
[Fig. 6]

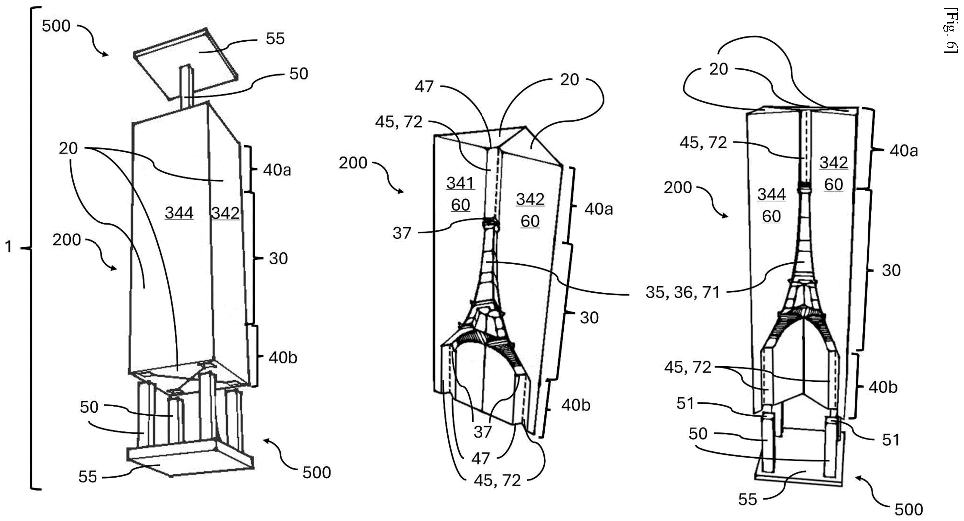

   La figure 6 représente une quatrième variante du dispositif de moulage selon l'invention, permettant d'aboutir au même produit alimentaire moulé que la troisième variante, dans laquelle l'unité de moulage est constituée par un assemble de blocs formant simultanément la portion primaire et les portions secondaires de l'unité de moulage ;
[Fig. 7]

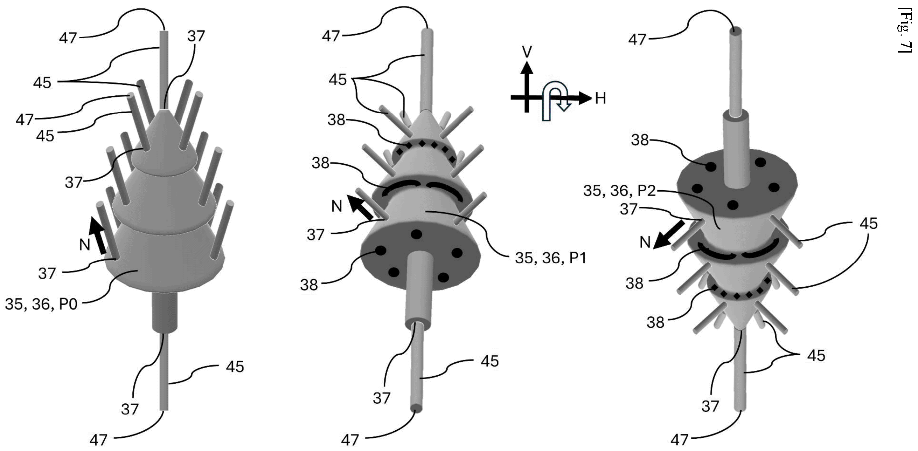

   La figure 7 illustre une cavité de moulage en forme de sapin et les canaux de circulation correspondants ;
[Fig. 8]

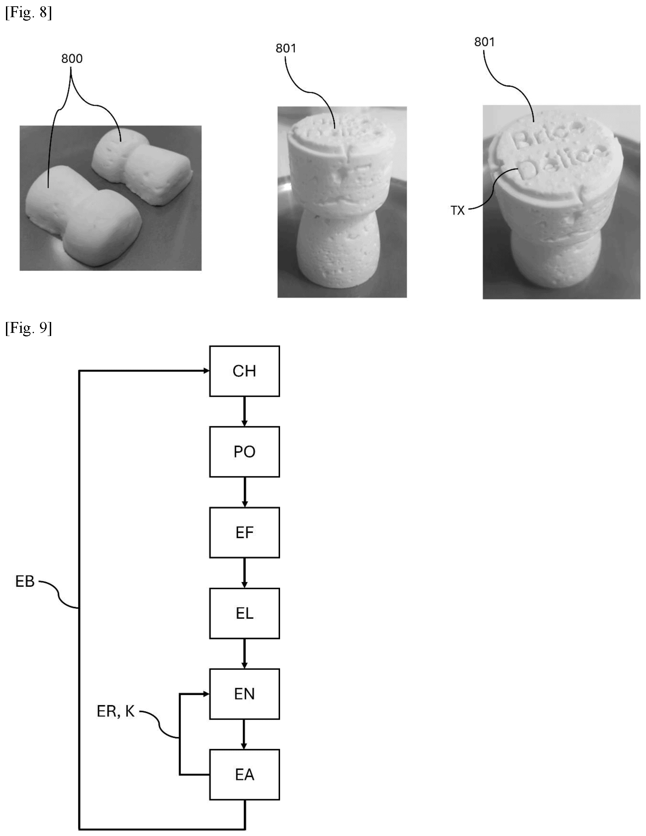

   La figure 8 illustre des produits alimentaires moulés obtenus à l'aide des dispositifs de moulage présentés aux figures 2 à 4 ;
[Fig. 9]
   La figure 9 est une représentation schématique du procédé de fabrication selon l'invention.

### Description détaillée

Différents modes de réalisation du dispositif de moulage selon l'invention sont présentés ci-après aux figures 1 à 9.

Les modes de réalisation de l'invention présentés ci-après concernent plus particulièrement la fabrication fromagère.

Ainsi à la figure 1 est illustré le produit alimentaire initial à fraction fluide, correspondant à un gel lacté, composé de fragments 80 et de lactosérum 81. Afin de fabriquer un produit alimentaire moulé tel qu'un fromage 800 illustré à la figure 8, le gel lacté 80, 81 est versé dans un dispositif de moulage 1 selon l'invention. Le tassement des fragments 80 du gel lacté 80, 81 et l'élimination au moins partielle du lactosérum 81 jusqu'à l'obtention du seuil désiré d'humidité permet d'obtenir le fromage 800 désiré, préférentiellement à pâte lactique.

Les figures 2 et 3 représentent une première variante d'un dispositif de moulage 1 selon l'invention. La figure 3 est une vue filaire permettant une visualisation plus aisée de la constitution interne des différentes parties du dispositif de moulage 1.

Cette première variante de dispositif de moulage 1 comprend :
- une unité de moulage 200 présentant une surface externe 20 et inclut :
   a) une portion primaire 30 comprenant au moins une cavité de moulage 35 présentant une surface de contact 36 ouverte au moins en une première ouverture de service 37, ladite surface de contact 36 étant configurée pour conformer le fromage 800, sous forme de demi-bouchon ;
   b) au moins une portion secondaire 40a comprenant au moins un canal de circulation 45 d'au moins la fraction fluide sous forme de lactosérum 81, du produit alimentaire initial 80, 81, ledit canal de circulation 45 s'étendant entre l'au moins une première ouverture de service 37 de la cavité de moulage 35 et une seconde ouverture de service 47 débouchant sur la surface externe 20 ;
- au moins un moyen d'obturation 500 présentant au moins une projection 50 apte à être insérée au niveau de la seconde ouverture de service 47 et à coopérer par coulissement avec le canal de circulation 45 jusqu'à la première ouverture de service 37, ladite projection 50 présentant à son extrémité distale une surface terminale 51 venant en regard et affleurant la première ouverture de service 37 dudit canal de circulation 45, ladite projection 50 étant apte à être au moins partiellement, préférentiellement intégralement, logée dans ledit canal de circulation 45, ladite projection 50 étant apte à retenir et/ou presser la fraction non fluide 80, c'est-à-dire les fragments de gel 80, du produit alimentaire initial 80, 81 dans la cavité de moulage 35.

Dans ce premier mode de réalisation de l'invention, la portion primaire et la portion secondaire forment un monobloc.

Avantageusement, l'unité de moulage 200 présente une surface de travail 71, 72 correspondant la surface de contact 71 de la cavité de moulage 35 et à la surface 72 de l'au moins un canal de circulation 45.

La cavité de moulage 45 permet de conformer le fromage dans les trois dimensions, ici en forme de demi-bouchon, permettant ainsi de s'affranchir des contraintes usuelles aboutissant à des fromages présentant obligatoirement un contour à bords verticaux ou obliques.

Le canal de circulation 45 et les première 37 et seconde 47 ouvertures de service sont dimensionnées pour et apte à laisser passer le produit alimentaire à fraction fluide 80, 81.

La surface de contact 36 est constituée d'au moins un matériau apte au contact alimentaire tel que le silicone, le polypropylène, le polyéthylène, préférentiellement le polyéthylène haute densité PEHD. Préférentiellement, l'ensemble de l'unité de moulage et/ou du moyen d'obturation 500 est constitué d'au moins un matériau apte au contact alimentaire tel que le silicone, le polypropylène, le polyéthylène, préférentiellement le polyéthylène haute densité PEHD.

La portion secondaire 40a, qui correspond dans la pratique à une réserve de matière, permet de compenser la perte de volume et les retournements nécessaires à la fabrication du produit alimentaire moulé 800.

Le moyen d'obturation 50 coopère par coulissement avec le canal de circulation dans lequel il vient s'engager jusqu'à la première ouverture de service 37, ainsi la projection 50 présente à son extrémité distale une surface terminale 51 venant en regard et affleurant la première ouverture de service 37 dudit canal de circulation 45. Ladite projection 50 est ainsi apte à retenir et/ou presser, préférentiellement de manière homogène, la fraction non fluide 80, c'est-à-dire les fragments de gel, du produit alimentaire initial 80, 81 dans la cavité de moulage 45. Le jeu mécanique est suffisant pour laisser circuler la fraction fluide 81, c'est-à-dire le lactosérum entre la projection 50 et la surface du canal de circulation 45, tandis que la projection 50 est apte à retenir et/ou à exercer une pression sur les fragments 80. La pression exercée peut être passive lorsqu'il s'agit de la force de gravité et/ou active lorsqu'une pression manuelle, ou réalisée à l'aide de poids additionnels ou bien encore automatisée est exercée sur le moyen d'obturation 500, par exemple lorsque le dispositif de moulage 1 appartient à un système de moulage disposant d'un sous-système automatisé apte à actionner par coulissement l'au moins une projection 50 de l'au moins un moyen d'obturation 500.

Ainsi, lorsqu'il est libre le canal de circulation 45 permet d'alimenter la cavité de moulage 35 en produit alimentaire à fraction fluide 80, 81 ou de l'en vider, tandis que lorsqu'il coopère avec la projection 50 du moyen d'obturation 500 du dispositif de moulage 1, le canal de circulation 45 est apte à laisser passer uniquement la fraction fluide de lactosérum 81 par le jeu mécanique existant entre les éléments dudit dispositif 1.

Avantageusement, la surface de contact 36 de la cavité de moulage 35 du dispositif de moulage 1 est en outre ouverte au moins en une ouverture additionnelle 38 configurée pour laisser circuler uniquement la fraction fluide 81 du produit alimentaire initial 80, 81 depuis la cavité de moulage 35 vers la surface externe 20. Les ouvertures additionnelles 38 sont dans cette variante de l'invention sous forme de canaux, permettant la mise en communication entre la cavité de moulage 35 et la surface externe 20 de l'unité de moulage 200.

L'extrémité proximale de la projection 50 du moyen d'obturation 500 présente une butée 55 de fin de course configurée pour venir en appui avec la surface externe 20 de l'unité de moulage 200 lorsque la projection 50 est complètement logée dans le canal de circulation 45. Une telle butée 55 permet de saisir aisément le moyen d'obturation 500 et/ou d'éviter tout dépassement de la course de la projection 50 dans le canal de circulation 45 qui aboutirait à sa pénétration dans ladite cavité 35.

La figure 4 représente un second mode de réalisation selon l'invention, permettant d'obtenir un fromage sous forme de bouchon 801. Dans cette seconde variante, le dispositif de moulage 1 comprend :
- une unité de moulage 200 présentant une surface externe 20 et incluant :
   a) une portion primaire 30 comprenant de multiples cavités de moulage 35 identiques présentant une surface de contact 36 ouverte au moins en une première ouverture de service 37, ladite surface de contact 36 étant configurée pour conformer le produit alimentaire moulé, tel qu'un fromage sous forme de bouchon 801 ;
   b) deux portions secondaires 40a, 40b comprenant des canaux de circulation 45 d'au moins la fraction fluide de lactosérum 81 du produit alimentaire initial 80, 81, les canaux de circulation 45 s'étendant chacun entre une première ouverture de service 37 de la cavité de moulage 45 et une seconde ouverture de service 47 débouchant sur la surface externe 20 ;
- deux moyens d'obturation 500 présentant de multiples projections 50 apte à être insérées au niveau des secondes ouvertures de service 47 et à coopérer par coulissement avec les canaux de circulation 45 jusqu'aux premières ouvertures de service 37, lesdites projections 50 présentant à leur extrémité distale une surface terminale 51 venant en regard et affleurant la première ouverture de service 37 du canal de circulation 45 respectif, chaque projection 50 étant apte à être logée dans ledit canal de circulation 45, ladite projection 50 étant apte à retenir et/ou presser la fraction non fluide, c'est-à-dire les fragments 80 du produit alimentaire initial 80, 81 dans la cavité de moulage 45 dédiée.

Dans ce mode de réalisation, chaque cavité de moulage 45 est configurée pour conformer le fromage dans les trois dimensions, en forme de bouchon, dont l'enveloppe externe latérale ne présente donc pas un bord vertical unique. Autrement dit, lorsque le fromage 801 est posé sur un plan horizontal, tel qu'illustré à la figure 8, le chapeau du bouchon présente un évasement plus large que le tronc servant de base audit bouchon.

Bien entendu, les surfaces de contact 36, et préférentiellement l'ensemble du dispositif de moulage 1, sont constituées d'au moins un matériau apte au contact alimentaire tel que le silicone, le polypropylène, le polyéthylène, préférentiellement le polyéthylène haute densité PEHD.

Dans cette variante, la portion primaire 30 est un bloc-moule unique présentant de multiples cavités de moulage 35 et chacune des portions secondaires 40a, 40b est un bloc-moule unique présentant de multiples canaux de circulation 45. Le dispositif de moulage comprend en outre deux moyens d'obturation 500 présentant de multiples projections 50 aptes à être insérées respectivement au niveau de chaque seconde ouverture de service 47 et à coopérer par coulissement avec le canal de circulation 45 dédié jusqu'à la première ouverture de service 37, chaque projection 50 présentant à son extrémité distale une surface terminale 51 venant en regard et affleurant la première ouverture de service 37 dudit canal de circulation 45, ladite projection 50 étant apte à être logée dans ledit canal de circulation 45, ladite projection 50 étant apte à retenir et/ou presser les fragments 80 non fluides du produit alimentaire initial 80, 81 dans la cavité de moulage 35.

Le jeu mécanique est suffisant pour laisser circuler la fraction fluide 81 de lactosérum entre les surfaces des projections 50 des moyens d'obturation 500 et les surfaces de travail 72 des canaux de circulation 45.

Dans cette variante de l'invention, la section du canal de circulation 45 et de la projection 50 respective présentent une forme similaire, circulaire.

Avantageusement dans ce second mode de réalisation, les projections 50 du moyen d'obturation 500 présentent à leur extrémité proximale une butée de fin de course 55 commune configurée pour venir en appui avec la surface externe 20 de l'unité de moulage 200 lorsque les projections sont complètement logées dans les canaux de circulation 45. Avantageusement dans ce second mode de réalisation est illustré la possibilité pour la ou les surfaces terminales 51 des projections de présenter une texturation TX, visible à la figure 8, faisant saillie dans la cavité de moulage 35 au travers de la première ouverture de service 37. Une telle texturation TX permet d'obtenir un rendu particulier à la surface du produit alimentaire moulé tel qu'un fromage 801 en forme de bouchon. Ici à titre d'exemple la texturation est un lettrage « Brice Délice ».

Les figures 5 et 6 illustrent un troisième et un quatrième mode de réalisation de l'invention, permettant d'obtenir au final un même produit alimentaire moulé, sous forme de tour Eiffel. Chacune des figures 5 et 6 propose trois vues du dispositif de moulage 1, à gauche sous forme assemblée, au centre et à droite sous forme partiellement éclatée et/ou filaire afin de faciliter la visualisation des divers éléments constitutifs.

A la figure 5, un troisième mode de réalisation de l'invention illustre un dispositif de moulage 1 comprenant :
- une unité de moulage 200 présentant une surface externe 20 et incluant :
   a) une portion primaire 30 comprenant une cavité de moulage 35 présentant une surface de contact 36 ouverte de multiples premières ouvertures de service 37, ladite surface de contact 36 étant configurée pour conformer le produit alimentaire moulé, sous forme de tour Eiffel ;
   b) deux portions secondaires 40a, 40b comprenant au moins un canal de circulation 45 d'au moins la fraction fluide 81 de lactosérum du produit alimentaire initial 80, 81, ledit canal de circulation 45 s'étendant entre l'au moins une première ouverture de service 37 de la cavité de moulage 35 et une seconde ouverture de service 47 débouchant sur la surface externe 20 ;
- deux moyens d'obturation 500 présentant au moins une projection 50 apte à être insérée au niveau de la seconde ouverture de service 47 et à coopérer par coulissement avec le canal de circulation 45 jusqu'à la première ouverture de service 37, ladite projection 50 présentant à son extrémité distale une surface terminale 51 venant en regard et affleurant la première ouverture de service 37 dudit canal de circulation 45, ladite projection 50 étant apte à être logée dans ledit canal de circulation 45, ladite projection 50 étant apte à retenir et/ou presser la fraction non fluide 80 du produit alimentaire initial 80, 81 dans la cavité de moulage 35. Avantageusement, la cavité de moulage 35 est configurée pour conformer le fromage dans les trois dimensions en forme de tour Eiffel, permettant ainsi de s'affranchir des contraintes usuelles aboutissant à des fromages présentant obligatoirement une enveloppe périphérique ou contour à bords verticaux ou obliques réguliers.

La surface de contact 36, et préférentiellement l'ensemble du dispositif de moulage 1, est constituée d'au moins un matériau apte au contact alimentaire tel que le silicone, le polypropylène, le polyéthylène, préférentiellement le polyéthylène haute densité PEHD.

Le dispositif de moulage 1 comprend en outre deux moyens d'obturation 500 :
- l'un des moyens d'obturation 500 présentant une projection 50 apte à être insérée au niveau de la seconde ouverture de service 47 de la portion secondaire 40a apte à coopérer avec la cavité de moulage 35 au niveau du sommet de la tour Eiffel,
- l'autre moyen d'obturation 500 présentant quatre projections 50 aptes à être insérée au niveau des secondes ouvertures de service 47 de la portion secondaire 40b apte à coopérer avec la cavité de moulage 35 au niveau des pieds de la tour Eiffel.

Chaque projection 50 est à coopérer par coulissement avec le canal de circulation 45 respectif, jusqu'à la première ouverture de service 37, ladite projection 50 présentant à son extrémité distale une surface terminale 51 venant en regard et affleurant la première ouverture de service 37 dudit canal de circulation 45, ladite projection 50 étant apte à logée dans ledit canal de circulation 45 et apte à retenir et/ou presser, préférentiellement de manière homogène, la fraction non fluide 80 du produit alimentaire initial 80, 81 dans la cavité de moulage 35.

Dans cette variante de l'invention, la section des canaux de circulation 45 et des projections 50 des moyens d'obturation 500 présentent une forme similaire, carrée.

Dans cette variante de l'invention, l'unité de moulage 200 est constituée d'un ensemble de blocs 31, 32, 33, 34, 41a, 42a, 43a, 44a, 41b, 42b, 43b, 44b aptes à être assemblés, chaque bloc 31, 32, 33, 34, 41a, 42a, 43a, 44a, 41b, 42b, 43b, 44b présentant :
a) au moins une surface de couplage 60 apte à coopérer avec au moins une surface de couplage 60 d'au moins un autre bloc 31, 32, 33, 34, 41a, 42a, 43a, 44a, 41b, 42b, 43b, 44b de l'ensemble de blocs 31, 32, 33, 34, 41a, 42a, 43a, 44a, 41b, 42b, 43b, 44b ;
b) au moins une surface de travail 71, 72 correspondant à au moins une portion 71 de la surface de contact 36 de la cavité de moulage ou à au moins une portion 72 de la surface de l'au moins un canal de circulation 45.

L'assemblage des blocs 31, 32, 33, 34, 41a, 42a, 43a, 44a, 41b, 42b, 43b, 44b met en jeu au moins un moyen d'assemblage 95, tel qu'un système à enclenchement ou emboîtement par coopération de projections et d'encoches.

L'au moins un moyen d'assemblage 95 permettant l'assemblage des blocs 31, 32, 33, 34, 41a, 42a, 43a, 44a, 41b, 42b, 43b, 44b est dans cette variante disposé de manière à traverser l'au moins une surface de couplage 60 d'au moins un bloc 31, 32, 33, 34, 41a, 42a, 43a, 44a, 41b, 42b, 43b, 44b et l'au moins une surface externe 20 d'au moins un bloc 31, 32, 33, 34, 41a, 42a, 43a, 44a, 41b, 42b, 43b, 44b.

Dans ce troisième mode de réalisation, chaque bloc 31, 32, 33, 34, 41a, 42a, 43a, 44a, 41b, 42b, 43b, 44b présente au moins une surface de couplage 60 plane apte à coopérer avec au moins une surface de couplage 60 plane d'au moins un autre bloc 31, 32, 33, 34, 41a, 42a, 43a, 44a, 41b, 42b, 43b, 44b de l'ensemble de blocs 31, 32, 33, 34, 41a, 42a, 43a, 44a, 41b, 42b, 43b, 44b. Plus précisément, l'unité de moulage 200 est constituée :
- d'un premier sous-ensemble de blocs primaires 31, 32, 33, 34 qui définit en position assemblée ladite portion primaire 30 et ladite cavité de moulage 35, et chaque bloc primaire 31, 32, 33, 34 présente une portion 71 de la surface de contact 36 de la cavité de moulage 35.
- de deux seconds sous-ensembles de blocs secondaires, définissant en position assemblée deux portions secondaires 40a, 40b respectives.

Un premier lot de blocs secondaire 41a, 42a, 43a, 44a correspondant à un second sous-ensemble de blocs secondaires 41a, 42a, 43a, 44a définit en position assemblée la portion secondaire 40a venant coopérer avec la portion primaire 30 au niveau du sommet de la tour Eiffel, le canal de circulation 45 vient ainsi en regard de la première ouverture de service 37 constituant l'ouverture du sommet de la tour Eiffel.

Un second lot de blocs secondaire 41b, 42b, 43b, 44b correspondant à un second sous-ensemble de blocs secondaires 41b, 42b, 43b, 44b définit en position assemblée la portion secondaire 40b venant coopérer avec la portion primaire 30 au niveau des pieds de la tour Eiffel, les canaux de circulation 45 viennent ainsi en regard des premières ouvertures de service 37 constituant les ouvertures du pieds de la tour Eiffel.

L'au moins un bloc secondaire 41a, 42a, 43a, 44a, 41b, 42b, 43b, 44b dudit second sous-ensemble 41a, 42a, 43a, 44a, 41b, 42b, 43b, 44b présente au moins une portion 72 de la surface de l'au moins un canal de circulation 45. Ainsi l'assemblage des blocs secondaires 41a, 42a, 43a, 44a, 41b, 42b, 43b, 44b permet de reconstituer le ou les canaux de circulation 45.

Par ailleurs, l'extrémité proximale de la projection 50 du moyen d'obturation 500 destinée à obturer le sommet de la tour Eiffel présente une butée 55 de fin de course configurée pour venir en appui avec la surface externe 20 de l'unité de moulage 200 lorsque la projection 50 est complètement logée dans le canal de circulation 45.

Enfin, les extrémités proximales des projection 50 du moyen d'obturation 500 destinées à obturer les pieds de la tour Eiffel présentent une butée 55 de fin de course commune configurée pour venir en appui avec la surface externe 20 de l'unité de moulage 200 lorsque les projections 50 sont complètement logées dans leurs canaux de circulation 45 respectifs. A la figure 6, un quatrième mode de réalisation de l'invention illustre un dispositif de moulage 1 permettant d'aboutir au même produit alimentaire moulé qu'avec le dispositif 1 de la figure 5.

Le dispositif de moulage 1 de la figure 6 présentant une configuration différente au niveau de l'unité de moulage 200. Dans cette quatrième variante de l'invention, l'unité de moulage 200 est constituée d'un ensemble de blocs 341, 342, 343 (non représenté), 344 aptes à être assemblés, chaque bloc présentant :
a) au moins une surface de couplage 60 apte à coopérer avec au moins une surface de couplage 60 d'au moins un autre bloc ;
b) au moins une surface de travail 71, 72 correspondant à au moins une portion 71 de la surface de contact 36 de la cavité de moulage et à au moins une portion 72 de la surface de l'au moins un canal de circulation 45.

L'unité de moulage 200 est ainsi constituée dans cette variante par l'assemblage de quatre blocs 200, 341, 342, 343, 344 présentant chacun :
- une portion 71 de la surface de contact 36 de la cavité de moulage 35, et
- au moins une portion 72 de la surface d'au moins un canal de circulation 45 :
   i) aboutissant à une première ouverture de service 37 correspondant à la portion secondaire 40a relative au sommet de la tour Eiffel,
   ii) aboutissant à des premières ouvertures de service 37 correspondant à l'autre portion secondaire 40b relative aux pieds de la tour Eiffel.

Autrement dit, l'unité de moulage 200 est ainsi constituée dans cette variante par l'assemblage de quatre blocs 200, 341, 342, 343, 344 présentant chacun :
- une portion 71 de la surface de contact 36 de la cavité de moulage 35, et
- trois portions 72 de canaux de circulation 45 correspondant au canal 45 aboutissant au sommet de la tour Eiffel et à deux canaux 45 aboutissant aux pieds de la tour Eiffel.

L'assemblage des blocs 341, 342, 343, 344 met en jeu au moins un moyen d'assemblage non représenté, tel qu'un système aimanté.

Dans le mode de réalisation présenté à la figure 6 chaque bloc présente au moins une surface de couplage 60 plane apte à coopérer avec au moins une surface de couplage 60 plane d'au moins un autre bloc de l'ensemble de blocs.

La figure 7 illustre la surface de contact 36, 71 d'une cavité de moulage 35 en forme de sapin et les surfaces 72 des canaux de circulation 45 correspondants. Ainsi la figure 7 constitue une visualisation des parties creuses d'une unité de moulage 200.

La vue la plus à gauche de la figure 7 présente la cavité de moulage 35 dans une position quelconque P0, la vue centrale de la figure 7 présente la cavité de moulage 35 dans une première position de travail P1, et la vue la plus à droite de la figure 7 présente la cavité de moulage 35 dans une seconde position de travail P2.

Dans cette cinquième variante de l'invention :
- dans la position de travail actuelle P0, les canaux de circulation 45 s'étendent chacun entre une première ouverture de service 37 de la cavité de moulage 35 et une seconde ouverture de service 47 débouchant sur la surface externe 20 non représentée, et sont orientés vers le haut ;
- dans la première position de travail P1, les canaux de circulation 45 s'étendent chacun entre une première ouverture de service 37 de la cavité de moulage 35 et une seconde ouverture de service 47 débouchant sur la surface externe 20 non représentée, et sont orientés vers le haut, selon leur vecteur N respectif normal à la première ouverture de service 37 ;
- dans la seconde position de travail P2, les canaux de circulation 45 s'étendent chacun entre une première ouverture de service 37 de la cavité de moulage 35 et une seconde ouverture de service 47 débouchant sur la surface externe 20 non représentée, et sont orientés vers le bas selon leur vecteur N respectif normal à la première ouverture de service 37.

Avantageusement, la surface de contact 36 de la cavité de moulage est en ouverte en de multiples ouvertures additionnelles 38, qui présentent des formes et/ou sections différentes : rondes, en fentes ou bien encore en losange.

Le passage de la première position de travail P1 à la seconde position de travail P2 s'effectue par rotation autour d'un axe horizontal H. Dans l'exemple présenté à la figure 7, la rotation horaire autour de l'axe horizontal H, représentée par une flèche, est d'environ 120 degrés.

Afin d'obtenir le produit alimentaire moulé 800, 801 à l'aide du dispositif de moulage 1 ou du système de moulage précédemment décrit, un procédé de fabrication d'un produit alimentaire moulé 800, 801 à partir d'un produit alimentaire initial 80, 81 à fraction fluide 81est prévu, et comprend tel qu'illustré à la figure 9 :
- une première étape CH de détection de la position de travail actuelle P0, P1, P2 de l'unité de moulage 200, 341, 342, 343, 344 et de choix d'une position de travail effective PE, P1, P2 pour l'unité de moulage 200, 341, 342, 343, 344 au moins parmi une première P1 et une seconde position de travail P2, la position de travail effective PE, P1, P2 étant différente de la position de travail P1, P2 précédemment choisie lorsque celle-ci existe ;
- une deuxième étape de positionnement PO au moins de l'unité de moulage 200, 341, 342, 343, 344 dans la position de travail effective choisie PE, P1, P2 à partir de la position de travail actuelle détectée P0, P1, P2, préférentiellement par pivotement d'au moins l'unité de moulage 200, 341, 342, 343, 344 autour d'un axe horizontal H, tout à fait préférentiellement le pivotement étant d'un demi-tour ;
- une troisième étape EF consistant à équiper, lorsqu'il existe et s'il en est dépourvu, l'au moins un canal de circulation 45 de l'unité de moulage 200, 341, 342, 343, 344 orienté horizontalement ou vers le bas dans la position de travail effective PE, P1, P2, avec un moyen de filtrage et/ou un moyen d'obturation 500 dont la projection (50) est complètement logée dans ledit canal 45 ;
- une quatrième étape EL consistant à libérer l'au moins un canal de circulation 45 orienté vers le haut dans la position de travail effective PE, P1, P2, en cas de présence, du moyen d'obturation 500 et/ou du moyen de filtrage ;
- une cinquième étape EN de remplissage de la cavité de moulage 35 et de l'au moins un canal de circulation 45 par le produit alimentaire initial à fraction fluide 80, 81 ;
- une sixième étape EA consistant à actionner par coulissement l'au moins une projection 50 de l'au moins un moyen d'obturation 500 dans l'au moins un canal de circulation 45 de l'unité de moulage 200, 341, 342, 343, 344 orienté vers le haut dans la position de travail effective PE, P1, P2, lorsque ledit canal existe, jusqu'à ce que la surface terminale 51 de l'extrémité distale de ladite projection 50 dudit moyen d'obturation 500 vienne en regard et affleure la première ouverture de service 37 de la cavité de moulage 35;
- optionnellement, après la sixième étape, la réitération ER des quatrième, cinquième et sixième étapes K fois, K étant un entier compris entre un et au plus dix et dépendant du produit alimentaire moulé 800, 801 à obtenir ;
- optionnellement la réitération EB, tant que le produit alimentaire moulé 800, 801 n'est pas obtenu, successivement des première, deuxième, troisième, quatrième, cinquième et sixième étapes.

A titre d'exemple, le procédé de fabrication permet ainsi d'obtenir un produit alimentaire moulé tel qu'un fromage en forme de demi-bouchon 800 illustré à la figure 8, à l'aide du dispositif de moulage 1 illustré aux figures 2 et 3 en mettant en œuvre les étapes suivantes :
- une première étape CH de détection de la position de travail actuelle de l'unité de moulage 200, 341, 342, 343, 344 et de choix d'une position de travail effective PE pour l'unité de moulage 200, 341, 342, 343, 344 correspondant à une première P1 dans laquelle la première ouverture de service 37 est orientée vers le haut, c'est-à-dire lorsque le vecteur normal N à la surface de la première ouverture de service 37, est orienté selon l'axe vertical V ;
- une deuxième étape de positionnement PO au moins de l'unité de moulage 200, 341, 342, 343, 344 dans la position de travail effective choisie P1 à partir de la position de travail actuelle détectée ;
- une quatrième étape EL consistant à libérer l'au moins un canal de circulation 45 orienté vers le haut dans la position de travail effective PE, en cas de présence, du moyen d'obturation 500, autrement dit on ouvre si besoin le dispositif de moulage 1 en séparant l'unité de moulage 200 et le moyen d'obturation 500 ;
- une cinquième étape EN de remplissage de la cavité de moulage 35 et de l'au moins un canal de circulation 45 par le produit alimentaire initial à fraction fluide 80, 81, autrement dit on remplit de fragments 80 de gel lacté baignant dans du lactosérum 81 la cavité de moulage 35 et le canal de circulation 45 ;
- une sixième étape EA consistant à actionner par coulissement l'au moins une projection 50 de l'au moins un moyen d'obturation 500 dans l'au moins un canal de circulation 45 de l'unité de moulage 200 orienté vers le haut dans la position de travail effective PE, lorsque ledit canal 45 existe, jusqu'à ce que la surface terminale 51 de l'extrémité distale de ladite projection 50 vienne en regard et affleure la première ouverture de service 37 de la cavité de moulage 35, autrement dit on procède à un premier pressage des fragments 80 de gel afin d'égoutter et d'extraire le lactosérum 81 au travers des ouvertures additionnelles 38 ;
- après la sixième étape EL, la réitération ER des quatrième, cinquième et sixième étapes K fois, K étant un entier compris entre un et au plus dix et dépendant du produit alimentaire moulé 800 à obtenir, autrement dit, on rouvre le dispositif de moulage 1 en séparant le moyen d'obturation 500 du canal de circulation 45 orienté vers le haut en position de travail effective PE puis on remplit à nouveau de fragments 80 baignant dans le lactosérum 81, puis on referme et on presse à l'aide du moyen d'obturation 500 autant de fois que nécessaire.

Bien entendu, puisque dans cette variante de l'invention il n'existe pas de canal de circulation 45 orienté horizontalement ou vers le bas dans la position de travail effective PE lors du premier cycle, la troisième étape EF consistant à équiper l'au moins un canal de circulation 45 avec un premier et/ou second moyen de filtrage et/ou un moyen d'obturation 500 n'est pas réalisée.

Il en va de même pour les retournements du fromage 800 en cours de fabrication, qui n'existent que si la réitération ER successive des première, deuxième, troisième, quatrième, cinquième et sixième étapes a lieu au moins une fois, et ne sont pas souhaitables dans cette variante de mise en œuvre de l'invention.

A titre d'exemple, le procédé de fabrication permet ainsi d'obtenir un produit alimentaire moulé tel qu'un fromage 801 en forme de bouchon complet illustré à la figure 8, à l'aide d'un dispositif de moulage selon la figure 4, en mettant en œuvre les étapes suivantes :
Tout d'abord, lors du premier cycle :
- une première étape de choix CH d'une position de travail effective PE pour l'unité de moulage 200 au moins parmi une première P1 et une seconde P2 position de travail, appartenant à un panel de positions de travail P1, P2 prédéterminées, la position de travail effective PE correspondant lors du premier cycle de fabrication à une première position de travail P1 dans laquelle l'au moins une première ouverture de service 37 de l'une des portions secondaires 40a est orientée vers le haut, c'est-à-dire lorsque le vecteur normal N à la surface de la première ouverture de service 37 de la portion secondaire 40a choisie est orienté selon l'axe vertical V ;
- une deuxième étape de positionnement PO au moins de l'unité de moulage 200 dans la position de travail effective choisie PE, P1, P2 à partir de la position de travail actuelle détectée P0, P1, P2, préférentiellement par pivotement d'au moins l'unité de moulage 200 autour d'un axe horizontal H ;
- une troisième étape EF consistant à équiper, lorsqu'il existe et s'il en est dépourvu, l'au moins un canal de circulation 45 de l'unité de moulage 200 orienté horizontalement ou vers le bas dans la position de travail effective PE, avec un premier et/ou second moyen de filtrage et/ou un moyen d'obturation 500 dont la projection 50 est complètement logée dans ledit canal, autrement dit on insère les projections 50 d'un moyen d'obturation 500 dans la partie basse de l'unité de moulage 200 afin de l'obturer ;
- une quatrième étape EL consistant à libérer l'au moins un canal de circulation 45 orienté vers le haut dans la position de travail effective PE, en cas de présence, du moyen d'obturation 500 et/ou du premier et/ou second moyen de filtrage, autrement dit on ouvre si besoin le dispositif de moulage 1 en séparant l'unité de moulage 200 et le moyen d'obturation 500 apte à coopérer avec le dessus de l'unité de moulage 200 en position effective PE ;
- une cinquième étape EN de remplissage de l'au moins une cavité de moulage 35 et de l'au moins un canal de circulation 45 par le produit alimentaire initial à fraction fluide 80, 81, autrement dit on remplit de fragments 80 de gel lacté baignant dans du lactosérum 81 chacune des cavités de moulage 35 et les canaux de circulation 45 associés;
- une sixième étape EA consistant à actionner par coulissement l'au moins une projection 50 de l'au moins un moyen d'obturation 500 dans l'au moins un canal de circulation 45 de l'unité de moulage 200 orienté vers le haut dans la position de travail effective PE, lorsque ledit canal 45 existe, jusqu'à ce que la surface terminale 51 de l'extrémité distale de ladite projection 50 vienne en regard et affleure la première ouverture de service 37 de la cavité de moulage 35, autrement dit on procède à un premier pressage des fragments 80 de gel afin d'égoutter et d'extraire le lactosérum 81 via le jeu existant entre les projections 50 du moyen d'obturation 500 et les surfaces 72 des canaux de circulation 45 orientés vers le bas en position de travail effective PE ;
- après la sixième étape, la réitération ER des quatrième, cinquième et sixième étapes K fois, K étant un entier compris entre un et au plus dix et dépendant du produit alimentaire moulé 800, 801 à obtenir, autrement dit, on rouvre le dispositif de moulage 1 en séparant le moyen d'obturation 500 des canaux de circulation 45 orientés vers le haut en position de travail effective PE puis on remplit à nouveau de fragments 80 baignant dans le lactosérum 81 et on referme et on presse à l'aide du moyen d'obturation 500 autant de fois que nécessaire.

Lors du ou des cycles EB suivants, chaque cycle EB consiste en la réitération EB, tant que le produit alimentaire moulé 801 n'est pas obtenu, successivement des première, deuxième, troisième, quatrième, cinquième et sixième étapes.

Dans cette variante de l'invention illustré en figure 4, lors du second cycle EB la première étape de choix CH d'une position de travail effective PE pour l'unité de moulage 200 s'effectue au moins parmi une première P1 et une seconde P2 position de travail, appartenant à un panel de positions de travail P1, P2 prédéterminées, la position de travail effective PE correspondant à la seconde position de travail P2 puisqu'au cours du premier cycle la première position de travail P1 a été employée.

La seconde position de travail P2 correspond à la position dans laquelle l'au moins une première ouverture de service 37 de l'autre des portions secondaires 40b est orientée vers le haut, c'est-à-dire lorsque le vecteur normal N à la surface de la première ouverture de service 37 de la nouvelle portion secondaire 40b choisie est orienté selon l'axe vertical V.

En d'autres termes, au moins l'unité de moulage 200 est pivotée autour d'un axe horizontal H, tout à fait préférentiellement le pivotement étant d'un demi-tour, c'est-à-dire que l'ensemble du dispositif de moulage 1 est retourné d'un demi-tour depuis la position P1 vers la position P2, de sorte qu'à chaque cycle EB on puisse ouvrir le moyen d'obturation 500 disposé sur le haut, remplir les cavités de moulage 35 de fragments 80 baignant dans le lactosérum 81, refermer et presser afin d'extraire la fraction liquide et ainsi de suite jusqu'à l'obtention du fromage moulé 801. Bien entendu il est aussi possible de remplir et presser plusieurs fois dans la première position de travail P1 avant d'effectuer un retournement, et de même en position de travail P2, on réitère ER, K alors successivement les quatrième, cinquième et sixième étapes du procédé de fabrication autant de K fois que nécessaire.

Le procédé de fabrication s'applique bien entendu également à la cavité de moulage 35 en forme de sapin proposée à la figure 7, et pour laquelle la position de travail effective PE peut être choisie parmi un plus grand panel de positions de travail prédéterminées, par exemple parmi quatre positions de travail prédéterminées.

Enfin, le procédé de fabrication s'applique bien entendu également à toute cavité de moulage 35 de forme complexe, présentant par exemple : des irrégularités, des concavités et/ou convexités, des points d'inflexions, et pour laquelle la position de travail effective PE peut être choisie parmi un plus grand panel de positions de travail P1, P2 prédéterminées, par exemple parmi au moins deux positions de travail P1, P2 prédéterminées, préférentiellement au moins quatre positions de travail prédéterminées, tout à fait préférentiellement au moins six positions de travail prédéterminées.

Bien entendu les exemples décrits ci-avant sont non limitatifs, et il apparaît clairement qu'avec le dispositif de moulage 1 et/ou le système de moulage associé il est possible de fabriquer tout produit alimentaire moulé à la forme désirée à partir du produit alimentaire initial à fraction fluide, notamment avec des bords complexes et tout à fait préférentiellement avec des bords périphériques complexes.

On comprend aisément que cette description détaillée porte sur des exemples de réalisation et de mise en œuvre particuliers de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

De la même manière, les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Dispositif de moulage (1) pour la fabrication d'un produit alimentaire moulé (800, 801) à partir d'un produit alimentaire initial (80, 81) à fraction fluide (81), comprenant :
- une unité de moulage (200, 341, 342, 343, 344) présentant une surface externe (20) et incluant :
a) une portion primaire (30, 31, 32, 33, 34) comprenant au moins une cavité de moulage (35) présentant une surface de contact (36) ouverte au moins en une première ouverture de service (37), ladite surface de contact (36) étant configurée pour conformer le produit alimentaire moulé (800, 801) ;
b) au moins une portion secondaire (40a, 40b, 41a, 41b, 42a, 42b, 43a, 43b, 44a, 44b) comprenant au moins un canal de circulation (45) d'au moins la fraction fluide (81) du produit alimentaire initial (80, 81), ledit canal de circulation (45) s'étendant entre l'au moins une première ouverture de service (37) de la cavité de moulage (35) et une seconde ouverture de service (47) débouchant sur la surface externe (20) ;
- au moins un moyen d'obturation (500) présentant au moins une projection (50) configurée pour être insérée au niveau de la seconde ouverture de service (47) et pour coopérer par coulissement avec le canal de circulation (45) jusqu'à la première ouverture de service (37), ladite projection (50) présentant à son extrémité distale une surface terminale (51) venant en regard et affleurant la première ouverture de service (37) dudit canal de circulation (45), ladite projection (50) étant configurée pour être au moins partiellement logée dans ledit canal de circulation (45), ladite projection (50) étant configurée pour retenir et/ou presser la fraction non fluide du produit alimentaire initial dans la cavité de moulage.

2. Dispositif (1) selon la revendication précédente, dans lequel la surface de contact (36) est en outre ouverte au moins en une ouverture additionnelle (38) configurée pour laisser circuler uniquement la fraction fluide (81) du produit alimentaire initial depuis la cavité de moulage (35) vers la surface externe (20).

3. Dispositif (1) selon l'une des revendications précédentes, dans lequel l'unité de moulage (200, 341, 342, 343, 344) est constituée d'un ensemble de blocs (31, 32, 33, 34, 41a, 41b, 42a, 42b, 43a, 43b, 44a, 44b, 341, 342, 343, 344) aptes à être assemblés, chaque bloc (31, 32, 33, 34, 41a, 41b, 42a, 42b, 43a, 43b, 44a, 44b, 341, 342, 343, 344) présentant :
a) au moins une surface de couplage (60) apte à coopérer avec au moins une surface de couplage (60) d'au moins un autre bloc (31, 32, 33, 34, 41a, 41b, 42a, 42b, 43a, 43b, 44a, 44b, 341, 342, 343, 344) de l'ensemble de blocs (31, 32, 33, 34, 41a, 41b, 42a, 42b, 43a, 43b, 44a, 44b, 341, 342, 343, 344) ;
b) au moins une surface de travail correspondant à au moins une portion (71) de la surface de contact (36) de la cavité de moulage (35) et/ou à au moins une portion (72) de la surface de l'au moins un canal de circulation (45).

4. Dispositif (1) selon la revendication précédente, dans lequel un premier sous-ensemble de blocs primaires (31, 32, 33, 34) définit en position assemblée ladite portion primaire (30) et ladite cavité de moulage (35), et dans lequel chaque bloc primaire (31, 32, 33, 34) présente une portion (71) de la surface de contact (36) de la cavité de moulage (35).

5. Dispositif (1) selon l'une des revendications 3 ou 4, dans lequel un second sous-ensemble de blocs secondaires (41a, 41b, 42a, 42b, 43a, 43b, 44a, 44b) de l'ensemble de blocs définit en position assemblée ladite portion secondaire (40a, 40b) et dans lequel au moins un bloc secondaire (41a, 41b, 42a, 42b, 43a, 43b, 44a, 44b) dudit second sous-ensemble comprend l'au moins un canal de circulation (45) et/ou présente au moins une portion (72) de la surface de l'au moins un canal de circulation (45).

6. Dispositif (1) selon l'une des revendications précédentes, dans lequel l'extrémité proximale de la projection (50) du moyen d'obturation (500) présente une butée de fin de course (55) configurée pour venir en appui avec la surface externe (20) de l'unité de moulage (200, 341, 342, 343, 344) lorsque la projection (50) est complètement logée dans le canal de circulation (45).

7. Dispositif (1) selon l'une des revendications précédentes, dans lequel le canal de circulation (45) constitue un volume de réserve pour le produit alimentaire initial à fraction fluide (80, 81).

8. Dispositif (1) selon l'une des revendications précédentes, dans lequel le canal de circulation (45) est rectiligne.

9. Dispositif (1) selon l'une des revendications précédentes, dans lequel le canal de circulation (45) est disposé selon un axe correspondant à la normale au plan de la première ouverture de service (37) orientée vers l'extérieur de la cavité de moulage (35).

10. Dispositif (1) selon l'une des revendications précédentes, dans lequel la surface terminale (51) de la projection (50) présente une texturation faisant saillie dans la cavité de moulage (35) au travers de la première ouverture de service (37).

11. Dispositif (1) selon l'une des revendications précédentes, comprenant un premier moyen de filtrage disposé en regard de l'au moins une première ouverture de service (37) et/ou de l'au moins une ouverture additionnelle (38).

12. Dispositif (1) selon l'une des revendications précédentes, comprenant un second moyen de filtrage disposé en regard de l'au moins une seconde ouverture de service (47).

13. Système de moulage mettant en œuvre un dispositif (1) selon l'une des revendications 1 à 12, comprenant au moins un sous-système automatisé parmi :
- un sous-système d'actionnement configuré pour actionner par coulissement l'au moins une projection (50) de l'au moins un moyen d'obturation (500) dans le canal de circulation (45) ;
- un sous-système de positionnement apte détecter une position de travail actuelle (P0, P1, P2) de l'unité de moulage (200, 341, 342, 343, 344) et apte à positionner au moins l'unité de moulage (200, 341, 342, 343, 344) dans une position de travail effective (PE) à partir de la position de travail actuelle détectée (P0, P1, P2), préférentiellement par pivotement au moins l'unité de moulage (200, 341, 342, 343, 344) autour d'un axe horizontal H, tout à fait préférentiellement le pivotement étant d'un demi-tour ;
- un sous-système vibrationnel configuré pour faire vibrer ledit dispositif de moulage (1), préférentiellement dans le plan horizontal, afin de faciliter l'élimination de la fraction fluide (81) du produit alimentaire initial à fraction fluide (80, 81).

14. Procédé de fabrication d'un produit alimentaire moulé (800, 801) à partir d'un produit alimentaire initial à fraction fluide (80, 81), mettant en œuvre un dispositif de moulage (1) selon l'une des revendications 1 à 12 ou un système de moulage selon la revendication 13, comprenant :
- une première étape (CH) de détection de la position de travail actuelle (P0, P1, P2) de l'unité de moulage (200, 341, 342, 343, 344) et de choix d'une position de travail effective (PE, P1, P2) pour l'unité de moulage (200, 341, 342, 343, 344) au moins parmi une première (P1) et une seconde position de travail (P2), la position de travail effective (PE, P1, P2) étant différente de la position de travail (P1, P2) précédemment choisie lorsque celle-ci existe ;
- une deuxième étape de positionnement (PO) au moins de l'unité de moulage (200, 341, 342, 343, 344) dans la position de travail effective choisie (PE, P1, P2) à partir de la position de travail actuelle détectée (P0, P1, P2), préférentiellement par pivotement d'au moins l'unité de moulage (200, 341, 342, 343, 344) autour d'un axe horizontal H, tout à fait préférentiellement le pivotement étant d'un demi-tour ;
- une troisième étape (EF) consistant à équiper, lorsqu'il existe et s'il en est dépourvu, l'au moins un canal de circulation (45) de l'unité de moulage (200, 341, 342, 343, 344) orienté horizontalement ou vers le bas dans la position de travail effective (PE, P1, P2), avec un moyen de filtrage et/ou un moyen d'obturation (500) dont la projection (50) est complètement logée dans ledit canal (45);
- une quatrième étape (EL) consistant à libérer l'au moins un canal de circulation (45) orienté vers le haut dans la position de travail effective (PE, P1, P2), en cas de présence, du moyen d'obturation (500) et/ou du moyen de filtrage ;
- une cinquième étape (EN) de remplissage de la cavité de moulage (35) et de l'au moins un canal de circulation (45) par le produit alimentaire initial à fraction fluide (80, 81) ;
- une sixième étape (EA) consistant à actionner par coulissement l'au moins une projection (50) de l'au moins un moyen d'obturation (500) dans l'au moins un canal de circulation (45) de l'unité de moulage (200, 341, 342, 343, 344) orienté vers le haut dans la position de travail effective (PE, P1, P2), lorsque ledit canal existe, jusqu'à ce que la surface terminale (51) de l'extrémité distale de ladite projection (50) dudit moyen d'obturation (500) vienne en regard et affleure la première ouverture de service (37) de la cavité de moulage (35).

15. Utilisation du dispositif de moulage (1) selon l'une des revendications 1 à 12 ou du système de moulage selon la revendication 13 pour la fabrication d'un fromage (800, 801) obtenu à partir d'un gel lacté (80, 81).
